# EUROPÄISCHE PATENTSCHRIFT

(11) **EP 2 966 331 B1**
(45) Veröffentlichungstag und Bekanntmachung des Hinweises auf die Patenterteilung: **28.02.2018**
(21) Anmeldenummer: 15001763.0
(22) Anmeldetag: 15.06.2015
(51) Int. Cl.: F16K 41/12

(54) **HUBVENTIL MIT MEMBRAN**
HYDRAULIC VALVE WITH MEMBRANE
SOUPAPE DE LEVAGE DOTEE DE MEMBRANE

(30) Priorität: 10.07.2014 DE 102014010193
(43) Veröffentlichungstag der Anmeldung: 13.01.2016
(73) Patentinhaber: GEA Tuchenhagen GmbH, 21514 Büchen (DE)
(72) Erfinder: Pieplow, Jörg, 23564 Lübeck (DE); Südel, Matthias, 23626 Ratekau (DE)
(74) Vertreter: Hauck Patentanwaltspartnerschaft mbB

(56) Entgegenhaltungen:
- WO-A1-01/61226
- CN-U- 203 477 326
- DE-A1-102007 014 282
- DE-U1- 20 211 511
- JP-A- 2002 188 795
- US-A- 4 666 166
- US-A1- 2012 012 200

## Beschreibung

Die Erfindung betrifft ein Hubventil mit einer Membran nach dem Oberbegriff des ersten Anspruchs.

Eine Gattung der Hubventile ist im Hinblick auf die Verwendung in aseptischen Einsatzfeldern konstruiert, beispielsweise in den Prozessanlagen der Lebensmittel- und Pharmaindustrie. In solchen Hubventilen kommt oft ein Balg zur Abdichtung des Schließelements gegen das Gehäuse zum Einsatz. Auf der Suche nach einer kostengünstigen Alternative zum Balg wurden Hubventile konstruiert, die anstelle des Balges eine Membran aufweisen.

Ein Hubventil mit einer Membran zeigt die GB-A 2179410**.** Die Membran besitzt eine Zentralöffnung, durch die Fluid strömt. Oberhalb und unterhalb der Membran sind die Zentralöffnung umgebende Unterlegscheiben vorgesehen. An einer dieser Unterlegscheiben ist ein Ventilsitz ausgebildet.

Ein Hubventil für aseptische Anwendungen wird in der DE-U 20211511 vorgeschlagen. Die Membran dichtet eine Gehäusedurchführung des Schließelements ab, wobei das Schließelement die Membran durchsetzt. Ein ebenfalls vom Schließelement durchsetztes Armierungselement ist auf der dem Produkt abgewandten Seite der Membran angeordnet und spannt die Membran großflächig ein.

Ein weiteres Hubventil wird in der WO-A-2013170931 vorgestellt. Die Membran wird an ihrem äußeren Rand in zwei winklig zueinander angeordneten Abschnitten formschlüssig aufgenommen und in einem dritten, in radialer Richtung innenliegenden Abschnitt geklemmt.

In dem Hubventil gemäß DE-A 102006025653 weist die Membran an ihrem inneren und äußeren Rand je einen Wulst auf, der im Wesentlichen einen runden Querschnitt aufweist. Die Wülste sind am Gehäuse und am Schließelement gehaltert.

Die DE-U 202006004173 stellt ein aseptisches Doppelsitzventil vor. Die Membran weist an ihrem Außenrand einen Wulst auf, der am Gehäuse aufgenommen ist. Der innere Rand der Membran ist ohne Wulst gezeigt und zwischen zwei Elementen einer Ventilstange eingespannt.

Ein weiteres aseptisches Doppelsitzventil wird in der DE-A 102012107992 gelehrt. Der äußere Rand der Membran steht in einem Winkel zur Membranfläche, beispielsweise in einem rechten Winkel, und bildet einen zylindrischen Abschnitt. Der innere Rand ist flach ausgeführt und am Schließelement geklemmt.

In den gezeigten Hubventilen wird die Membran, soweit sie zur Abdichtung einer Durchführung des Schließelements durch ein Gehäuse dient, durch Verformung während des Schaltvorgangs des Ventils belastet. Hinzu kommt, dass eine Einspannung des inneren und äußeren Randes angestrebt ist, die Verschleppung von Produkt in den Klemmspalt praktisch vermeidet. Diese Klemmung bewirkt zusammen mit der hubbedingten Verformung eine Gesamtbelastung der Membran. Im Stand der Technik wurde insbesondere die Einspannung des äußeren Randes der Membran betrachtet und verbessert.

Die US 2012/012200 A1 beschreibt ein Dekompressionsventil, welches beispielsweise zur Druckentlastung eines Motors eingesetzt wird. Gezeigt ist eine Membran, welche zusammen mit einer Haube eine Kammer begrenzt. In der Kammer befindet sich eine Feder. Diese Anordnung befindet sich auf einer ersten Seite einer Wand. Auf der gegenüberliegenden Seite sind Ventilstange, Ventilsitz und Schließelement angeordnet.

Die WO 01/61226 zeigt ein Regelventil, welches ein Schließelement mit zwei Durchlässen besitzt. Das Schließelement wird ausschließlich von einer Membran mit einer ersten und einer zweiten Seite getragen. Einer der Durchlässe ist so ausgeführt, dass er Fluidverbindung zwischen beiden Seiten der Membran herstellt. Eine Abdichtung einer Gehäusedurchführung mittels der Membran erfolgt nicht.

Die CN 203 477 326 schlägt ein Ventil vor, dessen Schließelement an einer Ventilstange befestigt ist, welche einen Flansch durchsetzt. Die Ventilstange wird hydraulisch bewegt, wobei der hydraulische Antrieb eine Membran umfasst, die mit der Ventilstange verbunden ist und eine Kammer in zwei Kammern unterteilt. Eine Abdichtung einer Gehäusedurchführung mittels der Membran erfolgt nicht.

In der JP 2002 188 795 A wird ein Füllventil vorgeschlagen, welches neben einer Schließstellung in zwei Offenstellungen mit unterschiedlichen Durchflussmengen schaltbar ist. Dies wird bewirkt, indem im Antrieb eine erste und eine zweite Membran angeordnet sind. Diese Membranen sind flexible Begrenzungen von Räumen, die mit Druckmittel beaufschlagbar sind. Beaufschlagung mit Druckmittel bewirkt die Verstellung des Ventilkörpers gegen die Kraft einer Rückstellfeder. Eine Abdichtung einer Gehäusedurchführung mittels der Membran erfolgt nicht.

Die US 4 666 166 A lehrt die Einspannung des Außenrandes einer Membran mit Hilfe einer Federscheibe zwischen zwei Platten.

Das Dokument DE 10 2007 014 282 A stellt ein Einsitzventil für beispielsweise lebensmitteltechnische Einrichtungen vor. Es besitzt einen Schließkörper an einer Ventilstange, die die Wandung eines Ventilgehäuses durchsetzt. Eine Membran dichtet die Gehäusedurchführung ab. Die Membran ist an der Ventilstange befestigt. Details der Befestigung werden nicht vorgestellt.

Es ist daher Aufgabe der Erfindung, die Einspannung des Innenbereichs der Membran so zu verbessern, dass die Belastung der Membran im Betrieb des Hubventils verringert wird.

Diese Aufgabe wird gelöst mit einem Hubventil mit den Merkmalen des Anspruchs 1. Vorteilhafte Weiterbildungen werden in den abhängigen Ansprüchen 2 bis 13 vorgestellt.

In einem Hubventil, welches eine zwischen einem ersten Anschluss und einem zweiten Anschluss vorgesehene Verbindungsöffnung umfasst, wobei ein Ventilsitz an der Verbindungsöffnung vorgesehen ist, mit welchem ein Schließelement zusammenwirkt, ist eine Gehäusedurchführung vorgesehen, welche von dem Schließelement durchsetzt wird. Diese Gehäusedurchführung wird mittels einer gehäuseseitig gehalterten Membran abgedichtet. Die Membran besitzt eine Zentralöffnung, welche in einer am Schließelement vorgesehenen Aufnahme gehaltert ist. Weiterhin ist eine Unterlegscheibe vorgesehen, welche ein mittiges Loch aufweist. Diese Unterlegscheibe ist auf einer der Gehäusedurchführung abgewandten Seite der Membran zusammen mit der Membran in der Aufnahme angeordnet, wobei Unterlegscheibe und Membran wenigstens abschnittsweise aus gleichartigem Material hergestellt sind. Gleichartig bezieht sich in diesem Zusammenhang insbesondere auf Festigkeitseigenschaften, Volumenänderung und chemische Beständigkeit der Materials.

Der Druck des Fluides, welches durch einen der Anschlüsse in das Hubventil eintritt, wirkt auf die Membran ein. Zusammen mit der Walkarbeit die durch Bewegen des Schließelements beim Schalten des Hubventils entsteht, wird eine Dehnung der Membran bewirkt. Dies bedeutet Zugkräfte sowie Schubspannungen im Material. Dies wird verstärkt, wenn die Membran in der Aufnahme eingespannt ist, da die innere Einspannung einen kleinen Flächentraganteil besitzt. Die Unterlegscheibe bewirkt vorteilhaft eine erhebliche Entlastung der Membran, insbesondere durch die Anordnung auf der Seite, welcher der Gehäusedurchführung abgewandt ist. Die Membran wird insgesamt in der Aufnahme entlastet, jedoch besonders stark am Übergang in die metallische Aufnahme hinein. Durch Verringerung der Materialbelastung wird die Lebensdauer erhöht. Als zusätzlicher Vorteil wird durch die verringerte Alterung der Membran im Bereich der Aufnahme die Reinheit an dieser Stelle erhöht, da die beabsichtige Funktionsweise der Membran erhalten bleibt und verschmutzungsanfällige Schadstellen an der Membran vermieden werden. Der Abschnitt aus gleichartigem Material ist entsprechend dieser beabsichtigten Wirkung zu gestalten, beispielsweise durch eine Materialauflage auf der Unterlegscheibe aus Membranmaterial, die der Membran zugewandt ist.

Die Membran weist ein Material mit einer Kompressibilität von wenigstens 20% nach ASTFM 36 auf. Die Unterlegscheibe weist ebenfalls ein Material mit einer Kompressibilität von wenigstens 20% nach ASTFM 36 auf. Der Vorteil ist, dass mit diesem Material eine dauerhaft hohe Formstabilität erreicht wird. Dies bewirkt, dass Klemmkräfte und Dichtwirkung sehr lange konstant bleiben und sich für die Funktion von Membran und/oder Unterlegscheibe vernachlässigbare Änderungen aufweisen.

Eine Weiterbildung der Aufnahme sieht vor, diese sich radial nach außen hin verjüngend zu gestalten. Es entsteht dadurch eine nach außen zunehmende Flächenpressung, durch die Verschmutzungseintrag in die Aufnahme hinein verhindert und eine gute Klemmung von Membran und Unterlegscheibe bewirkt wird.

Eine einfache Herstellung der Aufnahme, die zudem die Membran vorteilhaft gering auf Verschleiß beansprucht, wird gemäß einer Weiterbildung erreicht, indem die Aufnahme eine erste und eine zweite ebene Wand aufweist, die an sich gegenüberliegenden Seiten der Aufnahme vorgesehen sind.

Eine weitere Steigerung der Vorteile wird mit einer Weiterbildung erreicht, die vorsieht, dass wenigstens eine von erster und zweiter Wand der Aufnahme eine Erhebung aufweist. Diese Erhebung drückt sich in Membran und/oder Unterlegscheibe und bewirkt eine Erhöhung der Flächenpressung. Dies verbessert die Klemmung und wirkt gegen Eintrag von Verschmutzung.

Diese Vorteile lassen sich erreichen und steigern, wenn die Aufnahme eine erste und eine zweite Erhebung aufweist, die sich ganz oder teilweise gegenüberstehen.

Eine andere Weiterbildung verringert die Materialbeanspruchung durch Dehnung und Bewegung der Unterlegscheibe. Die Verringerung ergibt sich daraus, dass die Aufnahme auf der Seite der Membran, auf der die Unterlegscheibe angeordnet ist, am Übergang der Aufnahme in eine Außenwand des Schließelements eine Abrundung aufweist.

Eine einfache Herstellung des Hubventils und eine geringe Beanspruchung der Membran während der Schaltvorgänge des Hubventils werden erreicht, wenn die Membran eine das mittige Loch umgebende und an das mittige Loch angrenzende ebene Einspannfläche aufweist.

Durch Führung des mittigen Loches zur Zentrierung der Unterlegscheibe in einer radialen Richtung werden Bewegungen der Unterlegscheibe in der Aufnahme verringert. Dies verringert die Gefahr von Verschmutzung der Aufnahme und verringert die Materialbelastung.

Eine stoffschlüssige Verbindung der Unterlegscheibe mit der Membran verhindert die Reibung der Unterlegscheibe an der Membran und damit Abrieb. Die Möglichkeit der Einwanderung von Schmutz in den Kontaktbereich von Membran und Unterlegscheibe ist weitestgehend ausgeschlossen.

Dieser Vorteil lässt sich alternativ erreichen, wenn die Unterlegscheibe Teil der Membran ist.

Ein Auseinanderklaffen von Membran und Unterlegscheibe außerhalb der Aufnahme wird vorteilhaft vermieden indem ein Außenrand der Unterlegscheibe, vorzugsweise im eingebauten Zustand, bündig mit einer Außenwand des Schließelements abschließt. Dies verhindert das Einwandern von Schmutz in den Kontaktbereich von Membran und Unterlegscheibe.

Vorteilhaft die Klemmwirkung erhöhend und verschmutzungsgefährdete Leerräume verringernd ist eine Gestaltung, nach der ein die Unterlegscheibe aufnehmender Raum der Aufnahme durch die Unterlegscheibe zu etwa 95%, vorzugsweise 100%, gefüllt ist.

Materialbeanspruchungen eines der Elemente Membran und Unterlegscheibe auf Kosten des anderen können entstehen, wenn eines von beiden Elementen widerstandsfähiger als das andere ist. Daher sieht eine vorteilhafte Weiterbildung vor, dass Unterlegscheibe und Membran aus dem gleichen Material hergestellt sind.

Anhand eines Ausführungsbeispiels und seiner Weiterbildungen sollen die Erfindung näher erläutert und die Darstellung der Wirkungen und Vorteile vertieft werden.
Es zeigen:
- Fig. 1:: Längsschnitt durch ein Hubventil mit einer Membran in geöffneter Stellung des Schließelements;
- Fig. 2:: Ansicht des Details "A": Schnitt durch die Halterung des Außenrandes der Membran;
- Fig. 3:: Ansicht des Details "B": Schnitt durch die Halterung des Innenrandes der Membran;
- Fig. 4:: Ansicht des Details "B" in Weiterbildung: Schnitt durch die Halterung des Innenrandes der Membran gemäß einer Weiterbildung;
- Fig. 5:: Längsschnitt durch Membran und Unterlegscheibe.

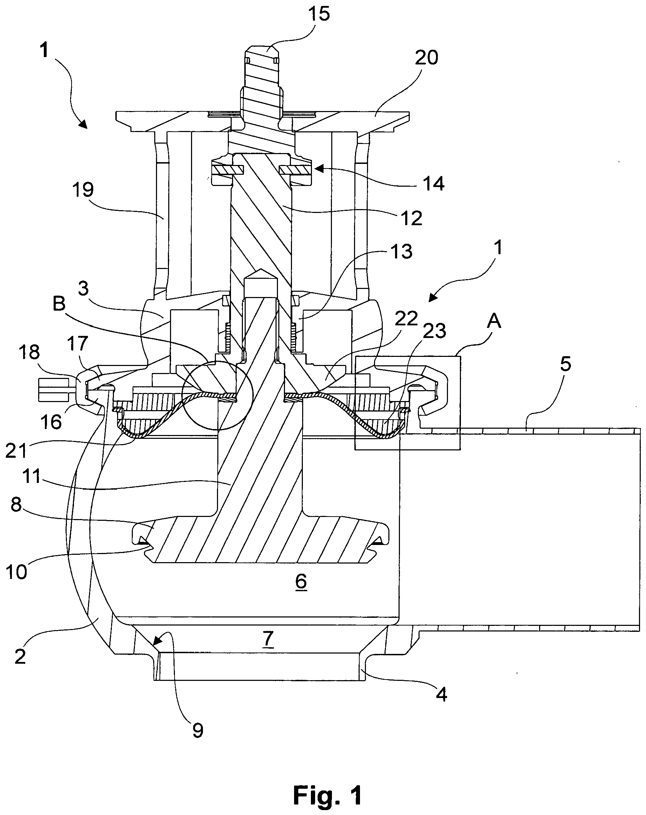

In **Fig. 1** ist ein Hubventil 1 gezeigt, welches als Einsitzventil ausgeführt ist. Das Hubventil 1 besitzt ein erstes Gehäuseteil 2 und ein zweites Gehäuseteil 3. An dem ersten Gehäuseteil 2 sind ein erster Anschluss 4 und ein zweiter Anschluss 5 vorgesehen, welche mit Teilen einer Prozessanlage, insbesondere Rohrleitungen, verbindbar ausgeführt sind und durch welche ein Innenraum 6 des Hubventils 1 für ein Fluid zugänglich ist. In der Fluidverbindung zwischen erstem Anschluss 4 und zweitem Anschluss 5 ist eine Verbindungsöffnung 7 vorgesehen, welche im ersten Gehäuseteil 2 den ersten Anschluss 4 umgebend ausgebildet ist.

Die Verbindungsöffnung 7 ist verschließbar ausgeführt, wodurch die Fluidverbindung zwischen erstem Anschluss 4 und zweitem Anschluss 5 schaltbar ist. Im Innenraum 6 ist ein Schließelement 8 vorgesehen, welches zum Verschließen der Verbindungsöffnung 7 und damit einer Schließstellung des Hubventils 1 in dichtenden Kontakt mit einem Ventilsitz 9 bringbar ist. Der Ventilsitz 9 ist die Verbindungsöffnung 7 umgebend in der Wandung des ersten Gehäuseteils 2 ausgebildet. Das Schließelement 8 weist eine Dichtungsaufnahme 10 auf, in der beispielsweise eine Dichtung aus einem Elastomer aufgenommen ist, welcher eine zusätzliche Verbesserung der Dichteigenschaften in der Schließstellung des Hubventils 1 bewirkt. In Fig. 1 ist eine Offenstellung des Hubventils 1 gezeigt, in welcher Schließelement 8 und Ventilsitz 9 voneinander getrennt sind und eine Fluidverbindung zwischen erstem Anschluss 4 und zweitem Anschluss 5 besteht.

Das Schließelement 8 weist auf seiner dem Ventilsitz 9 gegenüberliegenden Seite einen Stangenabschnitt 11 auf. Dieser ist mit einer Ventilstange 12 verbunden, welche das zweite Gehäuseteil 3 an einer dichtend wirkenden Gehäusedurchführung 13 durchsetzt. Das dem Stangenabschnitt 11 entgegengesetzte Ende der Ventilstange 12 ist in einer Drehentkopplung 14 aufgenommen, welche Teil eines Verbindungsabschnitts 15 ist. Die Drehentkopplung 14 ist so ausgeführt, dass sich Verbindungsabschnitt 15 und Ventilstange 12 gegeneinander verdrehen können, ohne dass der eine den anderen in Drehung versetzt. Der Verbindungsabschnitt 15 ist mit einer nicht gezeigten Linearverstellung verbindbar. Diese Linearverstellung kann als druckmittelbetriebener Antrieb, beispielsweise als pneumatischer Antrieb, ausgeführt sein.

Das erste Gehäuseteil 2 weist einen ersten Flansch 16 auf. Gegen diesen ersten Flansch 16 wird ein zweiter Flansch 17 gesetzt und beide Flansche 16 und 17 mittels eines geeigneten Verbindungsmittels, beispielsweise einer Klammer 18, gegeneinander gespannt.

Das zweite Gehäuseteil 3 besitzt auf der dem zweiten Flansch 17 abgewandten Seite eine Laterne 19, die die Ventilstange 12 umgibt. Die Laterne 19 endet in einem dritten Flansch 20, mittels welchem eine Verbindung mit einem Gehäuse der vorgenannten, hier nicht dargestellten Linearverstellung herstellbar ist.

Das Hubventil 1 ist für aseptische Arbeitsbedingungen ausgelegt, indem eine Membran 21 eine Abdichtung des Innenraumes 6 gegen ersten und zweiten Flansch 16 und 17 sowie gegen die Gehäusedurchführung 13 schafft. Die Membran 21 ist hierzu zwischen erstem Gehäuse 2 und dem Stangenabschnitt 11 des Schließelements 8 angeordnet. Im Innenraum 6 des Hubventils 1 kann ein höherer Fluiddruck als in der Umgebung des Hubventils 1 auftreten. Um daraus entstehende Belastungen der Membran 21 und damit deren Alterung zu reduzieren, sind ein innerer Stützkörper 22 und ein äußerer Stützkörper 23 vorgesehen, an die sich Abschnitte der Membran 21 je nach Schaltstellung des Hubventils anlegen können.

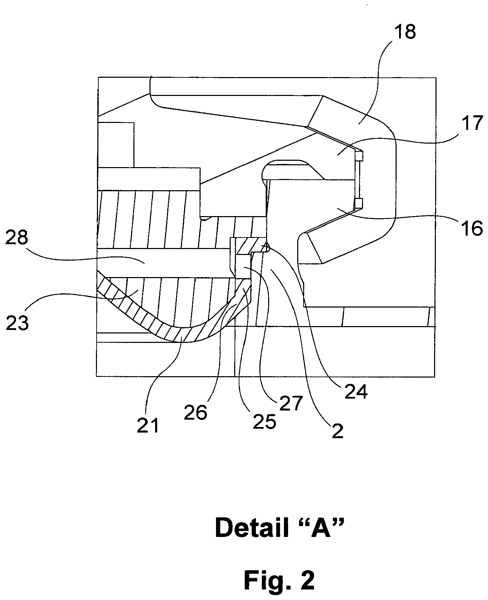

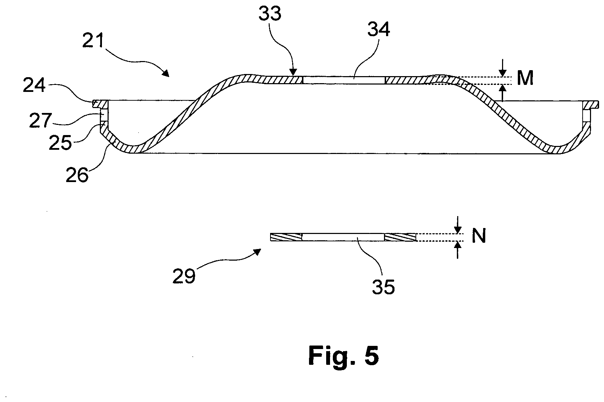

Die Befestigung der Membran 21 am Gehäuse des Hubventils 1 ist im Ausschnitt A vergrößert in **Fig. 2** dargestellt. Die Membran 21 ist als Einzelteil in **Fig. 5** im Schnitt gezeigt.

Die Membran 21 ist in ihrer radialen Erstreckung in mehrere Abschnitte unterteilt. Der radial außenliegende Abschnitt ist ein Ring 24, an den sich radial einwärts unmittelbar eine Hülse 25 anschließt. Ring 24 und Hülse 25 sind in einem Spalt zwischen äußerem Stützkörper 23 und erstem Gehäuseteil 2 gehaltert. Vorzugsweise ist der Ring 24 geklemmt, während die Hülse 25 geführt ist. Die Klemmung wird mittelbar durch die Klammer 18 bewirkt, welche ersten Flansch 16 und zweiten Flansch 17 gegeneinander drückt. Der zweite Flansch 17 übt eine axiale Kraft auf den zweiten Stützkörper 23 aus. Material und Stärke der Membran 21, Abmessungen von äußerem Stützkörper 23 und Gehäuseteil 2 sowie deren Lage zueinander sind so gewählt und bemessen, dass die Membran 21 elastisch kompressibel verformt wird. Sich radial innen an die Hülse anschließend ist vorzugweise ein zwischen äußerem Stützkörper 23 und Gehäuse 2 geklemmter konischer Abschnitt 26 vorgesehen.

In der Hülse 25 ist wenigstens ein Durchlass 27 vorgesehen, vorzugweise sind mehrere Durchlässe über den Umfang verteilt. Ein Fluid kann als so genannte Leckage im Falle einer Fehlfunktion entlang des konischen Abschnitts 26 und der Hülse 25 in die Halterung der Membran 21 eintreten. Durch den Durchlass 27 tritt die Leckage durch die Membran 21 hindurch. Die hindurchgetretene Leckage wird im äußeren Stützkörper 23 durch wenigstens einen Kanal 28 weitergeleitet, so dass die Leckage sichtbar gemacht wird. Vorzugweise sind mehrere Kanäle über den Umfang verteilt. Durch geeignete Gestaltung der Gehäusedurchführung 13 wird die Leckage aus dem Kanal 28 in den Bereich der Laterne 19 geführt, so dass sie für den Benutzer des Hubventils 1 sichtbar wird.

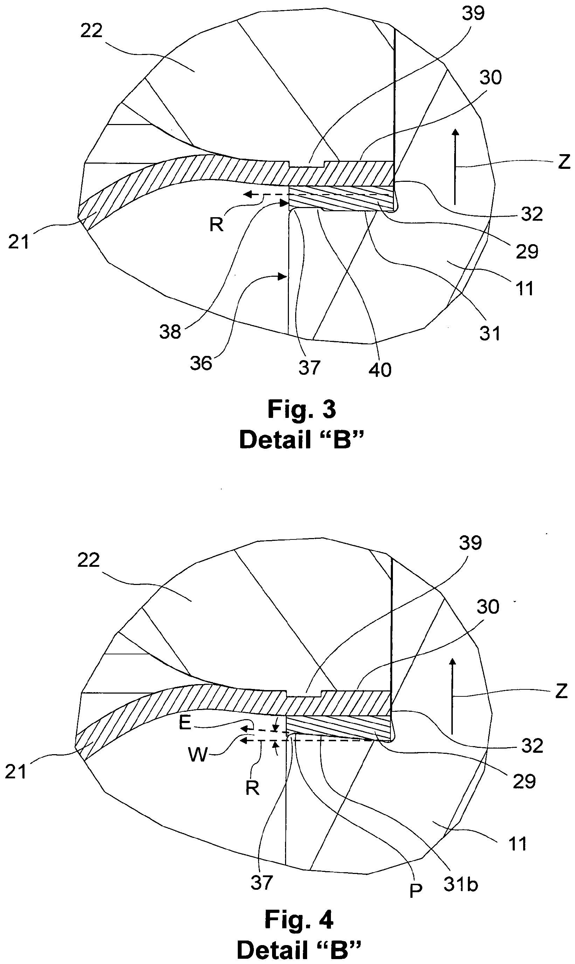

Die Befestigung der Membran 21 am Schließelement 8 ist in **Fig. 3** und **Fig. 4** als Detail B in vergrößerter Ansicht dargestellt, wobei **Fig. 4** eine Weiterbildung zeigt. In **Fig. 5** sind zur Verdeutlichung Membran 21 und Unterlegscheibe 29 einzeln im Schnitt dargestellt.

Zur Festlegung und Halterung der Membran 21 ist am Schließelement 8 eine Aufnahme vorgesehen. Diese Aufnahme wird gebildet durch eine erste ebene Wand 30, eine zweite ebene Wand 31 und eine radiale Wand 32. Die erste ebene Wand 30 befindet sich am inneren Stützkörper 22. Weiterer begrenzender Teil der Aufnahme ist die zweite ebene Wand 31, die am Stangenabschnitt 11 des Schließelements 8 vorgesehen ist. Erste Wand 30 und zweite Wand 31 sind in ihrer Grundform im Wesentlichen ringförmig und begrenzen die Aufnahme in axialer Richtung Z. In radialer Richtung R wird die Aufnahme von der radialen Wand 32 begrenzt, die vorzugsweise weitgehend zylindrisch geformt und am Stangenabschnitt 11 ausgebildet ist.

In der Aufnahme sind Membran 21 und Unterlegscheibe 29 aufgenommen. Beide stehen in berührendem Kontakt miteinander. Die Unterlegscheibe 29 ist auf der Seite der Membran 21 angeordnet, die in axialer Richtung Z dem inneren Stützkörper 22 gegenüberliegt. Eine ebene Einspannfläche 33 der Membran 21 berührt die erste ebene Wand 30 und die Unterlegscheibe 29 steht in berührendem Kontakt mit der zweiten ebenen Wand 31. Die Membran 21 besitzt eine Zentralöffnung 34 und die Unterlegscheibe 29 ein mittiges Loch 35. Zentralöffnung 34 und mittiges Loch 35 sind aus Fig. 5 leichter zu ersehen.

Die Abmessungen, insbesondere der freie Durchmesser, von Zentralöffnung 34 und mittigem Loch 35 sind so bemessen, dass die radiale Wand 32 eine Führung von Membran 21 und Unterlegscheibe 29 in radialer Richtung R bewirkt. Insbesondere ist das Verrutschen von Membran 21 und Unterlegscheibe 29 auf Fertigungstoleranzen bei der Fertigung von Membran 21, Unterlegscheibe 29 und radialer Wand 32 beschränkt.

Der Stangenabschnitt 11 und der innere Stützkörper 22 sind in ihrer Form und Lage zueinander derart bemessen, dass Membran 21 und Unterlegscheibe 29 wenigstens sicher in der Aufnahme geführt sind. Form und Lage von Stangenabschnitt 11 und innerem Stützkörper 22 beziehen sich insbesondere auf die sich ergebende räumliche Zuordnung von erster ebener Wand 30 und zweiter ebener Wand 31 zueinander. Vorzugsweise sind Form und Lage so bemessen, dass Membran 21 und Unterlegscheibe 29 mit Volumenänderung zusammengedrückt in der Aufnahme eingeklemmt sind.

Vorzugsweise wird für die Membran 21 oder die Unterlegscheibe 29 oder für beide ein Material hoher Formstabilität und mit einer Temperaturbeständigkeit von wenigstens 130°C eingesetzt. Durch die Formstabilität ist es möglich, auf mit der Membran 21 verbundene Stützmittel, bspw. Stützmembranen, zu verzichten. Vorzugsweise weist das Material eine hohe Medienbeständigkeit auf. Insbesondere soll es ein geringes Kriechverhalten aufweisen und vorzugsweise eine Kompressibilität von wenigstens 20%, besser 25%, vorteilhaft mehr als 30% nach ASTM F36 besitzen. Es kann sich beispielsweise um einen Verbund von mehreren, Polytetrafluorethylen (PTFE) enthaltenden Schichten handeln, wobei eine oder eine Mehrzahl der Schichten einen Füllstoff enthalten kann, beispielsweise Siliziumoxid. Dieses Material besitzt vorteilhaft ein reversibles, elastisch-kompressibles Verhalten. Bei Verwendung eines Materials mit diesen beschriebenen Eigenschaften ist es vorteilhaft, den Abstand von erster ebener Wand 30 und zweiter ebener Wand 31 zum Bewirken einer Klemmung so zu bemessen, dass Membran 21 oder Unterlegscheibe 29 oder beide auf maximal 2/3 der nominellen freien Membranstärke M bzw. freien Unterlegscheibenstärke N zusammengepresst wird.

Die Abmessungen der Aufnahme, der Membran 21 und der Unterlegscheibe 29 sowie eine gleichmäßige Belastung von Membran 21 und Unterlegscheibe 29 im Betrieb werden durch Benutzung von gleichartigem Material für Membran 21 und Unterlegscheibe 29 erreicht. Gleichartig bedeutet in diesem Zusammenhang, dass Festigkeitseigenschaften, Volumenänderung bei Einwirken von Wärme, Medien und Kräften sowie die chemische Beständigkeit nur so voneinander abweichen, dass unter Betriebsbedingungen kein Unterschied im Bauteilverhalten sichtbar ist.

Im Betrieb wird beim Schaltvorgang eine Kraft auf die Membran 21 ausgeübt, die in radialer Richtung R wirkt und zu einer Dehnung der Membran 21 in dieser Richtung führt. Dies wird auf die Unterlegscheibe 29 übertragen. Um Materialabrieb sehr stark zu verringern, ist am Übergang von zweiter ebener Wand 32 in eine Außenwand 36 des Stangenabschnitts 11 eine Abrundung 37 vorgesehen. Hierdurch wird eine scharfe Kante vermieden, die in die Unterlegscheibe 29 schneidet und deren Oberfläche schabt.

Ein bezogen auf die radiale Richtung R außen gelegener Außenrand 38 der Unterlegscheibe 29 ist freiliegend angeordnet und steht daher im Kontakt mit dem das Hubventil 1 durchströmende Fluid. Die Unterlegscheibe 29 kann sich daher in radialer Richtung R während der durch den Umschaltvorgang des Hubventils 1 hervorgerufenen Belastung aus der Aufnahme heraus ausdehnen oder bewegen. Gleiten von Membran 21 und Unterlegscheibe 29 gegeneinander wird auf diese Weise vermieden. Zudem werden Spalte vermieden, in denen sich Verschmutzung einlagern kann. Der Außenrand 38 schließt bündig mit der Außenwand 36 des Stangenabschnitts 11 ab. Dies verhindert ein Auseinanderklaffen von Membran 21 und Unterlegscheibe 29 und verringert damit die Möglichkeit zur Ansammlung von Verschmutzung. Vorteilhaft wird die Formänderung der Unterlegscheibe 29 durch die Einspannkräfte berücksichtigt. Die in der Aufnahme auf die Unterlegscheibe 29 einwirkenden Kräfte bewirken eine Ausdehnung insbesondere in radialer Richtung R. Die Unterlegscheibe 29 ist vorteilhaft so gestaltet, dass sie im eingebauten Zustand bündig abschließt.

Die erste Ebene Wand 30 der Aufnahme weist eine erste Erhebung 39 auf. Diese Erhebung ist im zusammengebauten Zustand des Hubventils 1 in die Membran 21 hineingedrückt und bewirkt zum einen eine lokale Erhöhung der Klemmkraft und zum anderen einen Formschluss. Beides verbessert die Halterung der Membran 21 durch verbesserte Festlegung der Lage der Membran 21 in der Aufnahme. Dieser Vorteil wird erhöht, wenn auf der zweiten Ebenen Wand 31 eine zweite Erhebung 40 vorgesehen ist, die in die Unterlegscheibe 29 hineingedrückt ist. Mit der zweiten Erhebung 40 wird die Festlegung der Unterlegscheibe 29 verbessert.

Die Abdichtung von Membran 21, Unterlegscheibe 29 und zweiter ebener Wand 31 und damit die Widerstandsfähigkeit der Anordnung gegen Verschmutzung werden verbessert, wenn die zweite Erhebung 40 an die Abrundung 37 angrenzend angeordnet ist.

Der Kraftfluss in Membran 21 und Unterlegscheibe 29 durch die Klemmung wird in Bezug auf die Gleichmäßigkeit der Materialbeanspruchung verbessert, indem erste Erhebung 39 und zweite Erhebung 40 sich gegenüberstehend angeordnet sind.

Die in **Fig. 4** gezeigte Weiterbildung des Details B des Hubventils 1 bezieht sich auf die Gestaltung der Aufnahme im Hinblick auf die Klemmkräfte. Die anderen anhand Fig. 3 erläuterten Gestaltungsgesichtspunkte sind unberührt davon anwendbar.

Anstelle einer Erhebung ist die zweite ebene Wand 31b konisch ausgeführt. Die radiale Erstreckungsrichtung E der zweiten ebenen Wand 31b bildet einen Winkel W mit der radialen Richtung R. Die radiale Erstreckungsrichtung E ist dabei so orientiert, dass der Abstand zwischen erster ebener Wand 30 und zweiter ebener Wand 31b mit zunehmendem Abstand in radialer Richtung R von einer Mitte der Anordnung abnimmt. Die Aufnahme ist somit sich in radialer Richtung R verjüngend ausgeführt. Der Winkel W ist so bemessen, dass Membran 21 und Unterlegscheibe 29 im Maximum auf Zweidrittel ihrer normalen Stärke zusammengepresst werden. Der Abstand zwischen erster ebener Wand 30 oder, soweit vorhanden, erster Erhebung 39 und höchstem Punkt P der zweiten ebenen Wand 31b beträgt Zweidrittel der Summe aus freier Membranstärke M und freier Unterlegscheibenstärke N.

Anstelle der ersten Erhebung 39 kann auch die erste ebene Wand 30 wenigstens teilweise im Bereich der Aufnahme konisch geformt sein.

Die Gestaltung der Unterlegscheibe 29 wurde an ein einem Hubventil 1 mit einem Schließelement 8 gezeigt. Die Erfindung ist ohne weiteres auf ein Hubventil mit mehreren Schließelementen, die auch unabhängig voneinander bewegbar ausgeführt sein können, übertragbar. Beispielsweise besitzt ein Doppelsitzventil mehrere Schließelemente mit koaxial zueinander, teleskopartig ineinander angeordneten Ventilstangen, von denen die äußere eine Gehäusedurchführung durchsetzen muss.

### Bezugszeichenliste

- 1: Hubventil
- 2: erstes Gehäuseteil
- 3: zweites Gehäuseteil
- 4: erster Anschluss
- 5: zweiter Anschluss
- 6: Innenraum
- 7: Verbindungsöffnung
- 8: Schließelement
- 9: Ventilsitz
- 10: Dichtungsaufnahme
- 11: Stangenabschnitt
- 12: Ventilstange
- 13: Gehäusedurchführung
- 14: Drehentkopplung
- 15: Verbindungsabschnitt
- 16: erster Flansch
- 17: zweiter Flansch
- 18: Klammer
- 19: Laterne
- 20: dritter Flansch
- 21: Membran
- 22: innerer Stützkörper
- 23: äußerer Stützkörper
- 24: Ring
- 25: Hülse
- 26: konischer Abschnitt
- 27: Durchlass
- 28: Kanal
- 29: Unterlegscheibe
- 30: erste ebene Wand
- 31: zweite ebene Wand
- 31b: zweite ebene Wand
- 32: radiale Wand
- 33: ebene Einspannfläche
- 34: Zentralöffnung
- 35: mittiges Loch
- 36: Außenwand
- 37: Abrundung
- 38: Außenrand
- 39: erste Erhebung
- 40: zweite Erhebung
- A: Detail "A": äußere Einspannung
- B: Detail "B": innere Einspannung
- E: radiale Erstreckungsrichtung
- M: freie Membranstärke
- N: freie Unterlegscheibenstärke
- P: höchster Punkt
- R: radiale Richtung
- W: Winkel
- Z: axiale Richtung

## Patentansprüche

1. Hubventil (1) mit einem ersten Anschluss (4), einem zweiten Anschluss (5), einer zwischen erstem Anschluss (4) und zweitem Anschluss (5) angeordneten Verbindungsöffnung (7), einem an der Verbindungsöffnung (7) vorgesehenen Ventilsitz (9), einer Gehäusedurchführung (13), einem Schließelement (8), welches mit dem Ventilsitz (9) zusammenwirkt und die Gehäusedurchführung (13) durchsetzt, einer gehäuseseitig gehalterten Membran (21), welche eine am Schließelement (8) in einer Aufnahme gehalterte Zentralöffnung (34) besitzt und welche die Gehäusedurchführung (13) abdichtet, mit einer ein mittiges Loch (35) aufweisenden Unterlegscheibe (29), **dadurch gekennzeichnet, dass** die Unterlegscheibe (29) auf einer der Gehäusedurchführung (13) abgewandten Seite der Membran (21) zusammen mit der Membran (21) in der Aufnahme angeordnet ist und dass die Unterlegscheibe (29) und die Membran (21) wenigstens abschnittsweise aus gleichartigem Material hergestellt sind, wobei die Membran (21) ein Material mit einer Kompressibilität von wenigstens 20% nach ASTM F36 aufweist und wobei die Unterlegscheibe (29) ein Material mit einer Kompressibilität von wenigstens 20% nach ASTM F36 aufweist.

2. Hubventil nach Anspruch 1, **dadurch gekennzeichnet, dass** die Aufnahme sich in radialer Richtung (R) nach außen hin verjüngt.

3. Hubventil nach Anspruch 1 oder 2, **dadurch gekennzeichnet, dass** die Aufnahme eine erste ebene Wand (30) und eine zweite ebene Wand (31; 31b) aufweist, die an sich gegenüberliegenden Seiten der Aufnahme vorgesehen sind.

4. Hubventil nach einem der vorhergehenden Ansprüche, **dadurch gekennzeichnet, dass** wenigstens eine von erster ebener Wand (30) und zweiter ebener Wand (31; 31b) eine Erhebung (39; 40) aufweist.

5. Hubventil nach einem der vorhergehenden Ansprüche, **dadurch gekennzeichnet, dass** die Aufnahme eine erste und eine zweite Erhebung (39, 40) aufweist, die sich ganz oder teilweise gegenüberstehenden.

6. Hubventil nach einem der vorhergehenden Ansprüche, **dadurch gekennzeichnet, dass** die Aufnahme auf der Seite der Membran (21), auf der die Unterlegscheibe (29) angeordnet ist, am Übergang der Aufnahme in eine Außenwand (36) des Schließelements (8) eine Abrundung (37) aufweist.

7. Hubventil nach einem der vorhergehenden Ansprüche, **dadurch gekennzeichnet, dass** die Membran (21) eine das mittige Loch (35) umgebende und an das mittige Loch (35) angrenzende ebene Einspannfläche (33) aufweist.

8. Hubventil nach einem der vorhergehenden Ansprüche, **dadurch gekennzeichnet, dass** das mittige Loch (35) zur Zentrierung der Unterlegscheibe (29) in einer radialen Richtung (R) geführt ist.

9. Hubventil nach einem der vorhergehenden Ansprüche, **dadurch gekennzeichnet, dass** die Unterlegscheibe (29) stoffschlüssig mit der Membran (21) verbunden ist.

10. Hubventil nach einem der Ansprüche 1 bis 8, **dadurch gekennzeichnet, dass** die Unterlegscheibe (29) Teil der Membran (21) ist.

11. Hubventil nach einem der vorhergehenden Ansprüche, **dadurch gekennzeichnet, dass** ein Außenrand (38) der Unterlegscheibe (29) bündig mit einer Außenwand (36) des Schließelements (8) abschließt.

12. Hubventil nach einem der vorhergehenden Ansprüche, **dadurch gekennzeichnet, dass** ein die Unterlegscheibe (29) aufnehmender Raum der Aufnahme durch die Unterlegscheibe (29) zu etwa 95%, vorzugsweise 100%, gefüllt ist.

13. Hubventil nach einem der vorhergehenden Ansprüche, **dadurch gekennzeichnet, dass** Unterlegscheibe (29) und Membran (21) aus dem gleichen Material hergestellt sind.

## Claims

1. A poppet valve (1) with a first connection piece (4), a second connection piece (5), a connection opening (7) arranged between the first connection piece (4) and the second connection piece (5), a valve seat (9) provided on the connection opening (7), a casing feed-through (13), a locking element (8), which cooperates with the valve seat (9 and penetrates the casing feed-through (13), a membrane (21) held at the casing side which has a central opening (34) held on the locking element (8) in a seating and which tightens the casing feed-through (13), with a washer (29) having a central hole (35), **characterised in that** the washer (29) is arranged in the seating together with the membrane (21) at a side of the membrane (21) facing away from the casing feed-through (13) and that the washer (29) and the membrane (21) are made of similar materials at least in sections, wherein the membrane (21) comprises a material with a compressibility of at least 20% according to ASTM F36 and wherein the washer (29) comprises a material with a compressibility of at least 20% according to ASTM F36.

2. The poppet valve according to claim 1, **characterised in that** the seating tapers towards the outside in the radial direction (R).

3. A poppet valve according to claim 1 or 2, **characterised in that** the seating has a first even wall (30) and a second even wall (31; 31b) which are provided on opposing sides of the seating.

4. A poppet valve according to one of the preceding claims, **characterised in that** at least one of the first even wall (30) and the second even wall (31; 31b) has an elevation (39; 40).

5. A poppet valve according to one of the preceding claims, **characterised in that** the seating has a first and a second elevation (39, 40), which completely or partially face each other.

6. A poppet valve according to one of the preceding claims, **characterised in that** on that side of the membrane (21) whereon the washer (29) is arranged, the seating has a rounding (37) on the transition of the seating into an outer wall (36) of the locking element (8).

7. A poppet valve according to one of the preceding claims, **characterised in that** the membrane (23) has an even clamping surface (33), surrounding the central hole (35) and adjacent to the central hole (35).

8. A poppet valve according to one of the preceding claims, **characterised in that** the central hole (35) is guided in a radial direction (R) for centring the washer (29).

9. A poppet valve according to one of the preceding claims, **characterised in that** the washer (29) is substance-bonded to the membrane (21).

10. A poppet valve according to one of the claims 1 to 8, **characterised in that** the washer (29) is a part of the membrane (21).

11. A poppet valve according to one of the preceding claims, **characterised in that** an outer edge (38) of the washer (29) ends flush with an outer edge (36) of the locking element (8).

12. A poppet valve according to one of the preceding claims, **characterised in that** a space of the seating housing the washer (29) is filled by the washer (29) to around 95%, preferably 100%.

13. A poppet valve according to one of the preceding claims, **characterised in that** the washer (29) and the membrane (21) are made of the same material.

## Revendications

1. Soupape de levage (1) avec un premier élément de raccord (4), un deuxième élément de raccord (5), un orifice de communication (7) arrangé entre le premier élément de raccord (4) et le deuxième élément de raccord (5), un siège de soupape (9) pourvu sur l'orifice de communication (7), un boîtier de passage (13), un élément de fermeture (8), qui coopère avec le siège de soupape (9) et pénètre le boîtier de passage (13), une membrane (21) fixée au coté boîtier et ayant une ouverture centrale (34) fixée sur l'élément de fermeture (8) dans une prise et étanchant le boîtier de passage (13), avec une rondelle (29) avec un trou central (35), **caractérisée en ce que** la rondelle (29) est arrangée dans la prise ainsi que la membrane (21) dans un coté de la membrane (21) opposé au boîtier de passage (13) et que la rondelle (29) et la membrane (21) sont faites de matériaux similaires au moins dans des sections, la membrane (21) comportant un matériau avec une compressibilité d'au moins 20% selon ASTM F36 et la rondelle (29) comportant un matériau avec une compressibilité d'au moins 20% selon ASTM F36.

2. Soupape de levage selon la revendication 1 ou 2, **caractérisée en ce que** la prise s'effile vers l'extérieur dans la direction radiale (R).

3. Soupape de levage selon la revendication 1 ou 2, **caractérisée en ce que** la prise a une première paroi plane (30) et une deuxième paroi plane (31; 31b) qui sont pourvues sur des cotés opposés de la prise.

4. Soupape de levage selon une des revendications précédentes, **caractérisée en ce que** au moins une de la première paroi plane (30) et de la deuxième paroi plane (31; 31b) a une élévation (39; 40).

5. Soupape de levage selon une des revendications précédentes, **caractérisée en ce que** la prise a une première et une deuxième élévation (39, 40), qui sont entièrement ou partiellement opposées l'une à l'autre.

6. Soupape de levage selon une des revendications précédentes, **caractérisée en ce que** sur le coté de la membrane (21) dans lequel la rondelle (29) est arrangée, la prise a un arrondi (37) dans la transition de la prise vers une paroi extérieure (36) de l'élément de fermeture (8).

7. Soupape de levage selon une des revendications précédentes, **caractérisée en ce que** la membrane (21) a une surface de serrage plane (33), entourant le trou central (35) et adjacent au trou central (35).

8. Soupape de levage selon une des revendications précédentes, **caractérisée en ce que** le trou central (35) est guidé dans une direction radiale (R) pour centrer la rondelle (29).

9. Soupape de levage selon une des revendications précédentes, **caractérisée en ce que** la rondelle (29) est reliée à la membrane (21) par accouplement des matières.

10. Soupape de levage selon une des revendications 1 à 8, **caractérisée en ce que** la rondelle (29) est une partie de la membrane (21).

11. Soupape de levage selon une des revendications précédentes, **caractérisée en ce que** un bord extérieur (38) de la rondelle (29) ferme en affleurant avec un bord extérieur (36) de l'élément de fermeture (8).

12. Soupape de levage selon une des revendications précédentes, **caractérisée en ce que** un espace de la prise logeant la rondelle (29) est rempli par la rondelle (29) à 95% environ, de préférence 100%.

13. Soupape de levage selon une des revendications précédentes, **caractérisée en ce que** la rondelle (29) et la membrane (21) sont faites du même matériau.
